# EUROPEAN PATENT APPLICATION

(11) **EP 4 793 856 A1**
(43) Date of publication of application: **19.08.2026**
(21) Application number: 25225134.3
(22) Date of filing: 18.12.2025
(51) Int. Cl.: G06Q 20/06, G06Q 20/10, G06Q 20/36, G06Q 20/38

(54) **METHOD AND SYSTEM FOR CONDUCTING AN OFFLINE TOKEN-BASED DIGITAL CURRENCY PAYMENT**

(30) Priority: 12.02.2025 IN 202521011628
(71) Applicant: Tata Consultancy Services Limited, Maharashtra (IN)
(72) Inventor: NARENDRA KUMAR, Nelabhotla Venkata, 500081 Hyderabad, Telangana (IN); NARUMANCHI, Harika, 500081 Hyderabad, Telangana (IN); MADDALI, Lakshmi Padmaja, 500081 Hyderabad, Telangana (IN)
(74) Representative: Goddar, Heinz J.

(57) **Abstract**

This disclosure relates generally to a method and system for conducting an offline token-based digital currency payment. State-of-the-art methods facilitating offline transaction lacks validity of each token involved in the transaction. Moreover, a separate record is required for the transactions processed in an online mode and for the transactions processed in an offline mode. Further, managing multi-hop offline transactions are not yet achieved. The disclosed method involves offline transfer of set of tokens from a payer's wallet to a payee's wallet. The method captures one or more transaction dependencies associated with each token and assigns a token-proof to each token in the set of tokens. The method executes the transaction having cleared or no prior transaction dependency by transmitting the set of tokens from the payer's wallet to the payee's wallet using a payer's WSP, a central authority, and a payee's WSP.

## Description

### CROSS-REFERENCE TO RELATED APPLICATIONS AND PRIORITY

The present application claims priority to Indian application no. 202521011628 filed on February 12, 2025.

### TECHNICAL FIELD

The disclosure herein generally relates to offline transaction, and, more particularly, to a method and system for offline transaction in token-based digital currency.

### BACKGROUND

In the evolving global digital economy, countries are coming up with their own sovereign digital currencies, issued and regulated by the central bank of the country. The introduction of these digital currencies is to enhance payment efficiency, ease smaller and bigger transactions, and reduce transaction costs. For the wider acceptance of digital currencies, support for offline transactions becomes crucial, i.e. making digital transaction possible without constant internet connectivity, and this poses significant challenges. Firstly, users have low trust in the currency received offline. Also, maintaining transaction history in two separate ledgers, one for online transactions, and another for offline transaction is a cumbersome job. Secondly, the detection of double spending remains ambiguous. And thirdly, the online transactions and the offline transactions are processed through separate mechanisms and require due infrastructure for managing. Further, currently available platforms for processing the offline transactions provide limited support for multi-hop offline transactions.

### SUMMARY

Embodiments of the present disclosure present technological improvements as solutions to one or more of the above-mentioned technical problems recognized by the inventors in conventional systems. For example, in one embodiment, a method of conducting an offline token-based digital currency payment is provided. The method includes preparing a payer's wallet for a transaction, wherein the payer's wallet is in an offline-mode. The payer's wallet comprises one or more tokens, comprising: (a) one or more wallet owned tokens (WTs), and (b) one or more offline received tokens (RTs). The transaction involves a transfer of a set of tokens (ST) from the one or more tokens of the payer's wallet to a payee's wallet. The transfer of the ST involves transfer of at least one of (i) the one or more WTs, (ii) the one or more RTs. The ST is pre-validated as safe for an offline usage as each WTs or RTs are validated based on clearance of the respective transaction dependencies. Further, the method involves assigning a token-proof to each of the one or more ST. Each of the one or more WTs is assigned a 'NULL' token-proof, and each of the one or more RTs is assigned a 'T' token-proof. The T token-proof is an offline-transaction at which each of the one or more RTs is received by the payer's wallet, and wherein the offline-transaction is dependent on T. Further, the method involves transferring the ST from the one or more WTs and the one or more RTs from the payer's wallet to the payee's wallet. Each of the one or more ST has the token-proof. To facilitate the transfer of ST, the payer's wallet and the payee's wallet are required to exist in proximity. The payer's wallet independently communicates to a payer's wallet service provider (WSP), and the payee's wallet independently communicates to a payee's WSP once the payer's wallet and the payee's wallet gains an internet connectivity (an online mode). Further, the method involves providing one or more transaction dependencies involved in the transfer of the ST from the one or more WTs and the one or more RTs to a transaction dependency manager (TDM). The payer's WSP and the payee's WSP independently communicates the one or more transaction dependencies to the TDM. Further, the method involves processing, the one or more transaction dependencies involved in transferring the ST. The transaction is determined as a 'ready transaction' when the one or more transaction dependencies on which the transaction is dependent are executed successfully. The transaction is determined as a 'waiting transaction' when the one or more transaction dependencies on which the transaction is dependent are yet to be executed successfully. And the transaction is determined as a 'failed transaction' when at least one of the one or more transaction dependencies is a futile transaction. Further the method involves submitting, the transaction determined as the 'ready transaction' to the payer's WSP for executing the transfer of the ST from the one or more WTs and the one or more RTs from the payer's wallet to the payee's wallet. Further, the method involves executing the 'ready transaction' by transmitting the ST from the one or more WTs and the one or more RTs from the payer's wallet to the payee's wallet using the payer's WSP, a central authority, and the payee's WSP. The one or more WTs and the one or more RTs of the payer's wallet represent a digital currency to be utilized in the offline payment, and the payer's WSP guarantees that the one or more WTs are owned by the payer's wallet. And an ownership of each of the one or more RTs depends on the successful execution of a previous offline transaction.

In another aspect, a system of conducting an offline token-based digital currency payment is provided. The system includes at least one memory storing programmed instructions; one or more Input /Output (I/O) interfaces; and one or more hardware processors, and an offline digital currency transfer model operatively coupled to a corresponding at least one memory, wherein the system is configured to prepare a payer's wallet for a transaction, wherein the payer's wallet is in an offline-mode. The payer's wallet comprises one or more tokens, comprising: (a) one or more wallet owned tokens (WTs), and (b) one or more offline received tokens (RTs). The transaction involves a transfer of a set of tokens (ST) from the one or more tokens of the payer's wallet to a payee's wallet. The transfer of the ST involves transfer of at least one of (i) the one or more WTs, (ii) the one or more RTs. The ST is pre-validated as safe for an offline usage as each WTs or RTs are validated based on clearance of the respective transaction dependencies. The system is configured to assign a token-proof to each of the one or more ST. Each of the one or more WTs is assigned a 'NULL' token-proof, and each of the one or more RTs is assigned a 'T' token-proof. The T token-proof is an offline-transaction at which each of the one or more RTs is received by the payer's wallet, and wherein the offline-transaction is dependent on T. The system is configured to transfer the ST from the one or more WTs and the one or more RTs from the payer's wallet to the payee's wallet. Each of the one or more ST has the token-proof. To facilitate the transfer of ST, the payer's wallet and the payee's wallet are required to exist in proximity. The payer's wallet independently communicates to a payer's wallet service provider (WSP), and the payee's wallet independently communicates to a payee's WSP once the payer's wallet and the payee's wallet gains an internet connectivity (an online mode). The system is configured to provide one or more transaction dependencies involved in the transfer of the ST from the one or more WTs and the one or more RTs to a transaction dependency manager (TDM). The payer's WSP and the payee's WSP independently communicates the one or more transaction dependencies to the TDM. The system is configured to process the one or more transaction dependencies involved in transferring the ST. The transaction is determined as a 'ready transaction' when the one or more transaction dependencies on which the transaction is dependent are executed successfully. The transaction is determined as a 'waiting transaction' when the one or more transaction dependencies on which the transaction is dependent are yet to be executed successfully. And the transaction is determined as a 'failed transaction' when at least one of the one or more transaction dependencies is a futile transaction. The system is configured to submit the transaction determined as the 'ready transaction' to the payer's WSP for executing the transfer of the ST from the one or more WTs and the one or more RTs from the payer's wallet to the payee's wallet. The system is configured to execute the 'ready transaction' by transmitting the ST from the one or more WTs and the one or more RTs from the payer's wallet to the payee's wallet using the payer's WSP, a central authority, and the payee's WSP. The one or more WTs and the one or more RTs of the payer's wallet represent a digital currency to be utilized in the offline payment, and the payer's WSP guarantees that the one or more WTs are owned by the payer's wallet. And an ownership of each of the one or more RTs depends on the successful execution of a previous offline transaction.

In yet another aspect, a computer program product including a non-transitory computer-readable medium embodied therein a computer program of conducting an offline token-based digital currency payment is provided. The computer readable program, when executed on a computing device, causes the computing device to prepare a payer's wallet for a transaction, wherein the payer's wallet is in an offline-mode. The payer's wallet comprises one or more tokens, comprising: (a) one or more wallet owned tokens (WTs), and (b) one or more offline received tokens (RTs). The transaction involves a transfer of a set of tokens (ST) from the one or more tokens of the payer's wallet to a payee's wallet. The transfer of the ST involves transfer of at least one of (i) the one or more WTs, (ii) the one or more RTs. The ST is pre-validated as safe for an offline usage as each WTs or RTs are validated based on clearance of the respective transaction dependencies. The computer readable program, when executed on a computing device, causes the computing device to assign a token-proof to each of the one or more ST. Each of the one or more WTs is assigned a 'NULL' token-proof, and each of the one or more RTs is assigned a 'T' token-proof. The T token-proof is an offline-transaction at which each of the one or more RTs is received by the payer's wallet, and wherein the offline-transaction is dependent on T. The computer readable program, when executed on a computing device, causes the computing device to transfer the ST from the one or more WTs and the one or more RTs from the payer's wallet to the payee's wallet. Each of the one or more ST has the token-proof. To facilitate the transfer of ST, the payer's wallet and the payee's wallet are required to exist in proximity. The payer's wallet independently communicates to a payer's wallet service provider (WSP), and the payee's wallet independently communicates to a payee's WSP once the payer's wallet and the payee's wallet gains an internet connectivity (an online mode). The computer readable program, when executed on a computing device, causes the computing device to provide one or more transaction dependencies involved in the transfer of the ST from the one or more WTs and the one or more RTs to a transaction dependency manager (TDM). The payer's WSP and the payee's WSP independently communicates the one or more transaction dependencies to the TDM. The computer readable program, when executed on a computing device, causes the computing device to process the one or more transaction dependencies involved in transferring the ST. The transaction is determined as a 'ready transaction' when the one or more transaction dependencies on which the transaction is dependent are executed successfully. The transaction is determined as a 'waiting transaction' when the one or more transaction dependencies on which the transaction is dependent are yet to be executed successfully. And the transaction is determined as a 'failed transaction' when at least one of the one or more transaction dependencies is a futile transaction. The computer readable program, when executed on a computing device, causes the computing device to submit the transaction determined as the 'ready transaction' to the payer's WSP for executing the transfer of the ST from the one or more WTs and the one or more RTs from the payer's wallet to the payee's wallet. The computer readable program, when executed on a computing device, causes the computing device to execute the 'ready transaction' by transmitting the ST from the one or more WTs and the one or more RTs from the payer's wallet to the payee's wallet using the payer's WSP, a central authority, and the payee's WSP. The one or more WTs and the one or more RTs of the payer's wallet represent a digital currency to be utilized in the offline payment, and the payer's WSP guarantees that the one or more WTs are owned by the payer's wallet. And an ownership of each of the one or more RTs depends on the successful execution of a previous offline transaction.

It is to be understood that both the foregoing general description and the following detailed description are exemplary and explanatory only and are not restrictive of the invention, as claimed.

### BRIEF DESCRIPTION OF DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a system 100 for an offline token-based digital currency payment, according to some embodiments of the present disclosure.
FIG. 2 illustrates an overall framework of offline token-based digital currency payment, according to some embodiments of the present disclosure.
FIGS. 3A, 3B and 3C are flow diagrams of an illustrative method 300 for offline token-based digital currency payment, using the system of FIG. 1, according to some embodiments of the present disclosure.
FIG. 4 illustrates a token-based offline transaction where the payer is in the offline mode, and the payee is in the online mode.
FIG. 5 illustrates a token-based offline transaction where the payer is in the offline mode, and the payee is in the offline mode.

### DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present invention provides an offline token-based digital currency payment method. The offline token-based digital currency payment method provides a cash-like user experience. It also enables usage of tokens that are received offline in one or more previous transactions. The present invention supports multi-hop offline transactions. The present invention is equipped with a functionality to detect double spending as well. A transaction in the context of the digital currency (DC) is defined as recording transfer of currency between parties. Token represents an atomic unit of DC that is issued by a legitimate issuer, and has a fixed value referred to as token denomination. Authenticity of the token can be verified from the information contained in the token. The key stakeholders participating in the DC payment ecosystem are (a) a central authority (CA), (b) wallet service providers (WSPs), (c) wallets that are held by end-users to manage their DCs, and (d) transaction dependency manager (TDM). The transaction can be online or offline depending on the network connectivity of a payer and a payee. The transaction is referred to as an online transaction when the payer has network connectivity and can connect with its WSP. The transaction is referred to as an offline transaction when the payer lacks network connectivity. The CA maintains a central ledger that maps a token to its managing WSP for all the tokens in circulation. The CA is responsible for transaction finalization. The WSP develops wallets and other related services to help end users manage their DC. The key responsibilities of the WSP includes token maintenance through ownership mapping, facilitating DC payments, providing wallet applications that allow customers to store, manage and transact using the DC framework, allow merchants to accept payments through a Point-of-Sale (POS), and maintain a set of outstanding transactions including offline transactions. The end-users use DC for transactions, for instance payments or purchases. The end-users can be consumers, businesses, merchants or government entities. The end-users maintain wallets having an information about transactions spent offline, transactions received offline with proof and tokens. The TDM captures and manages the dependencies between offline transactions, which are crucial to process them in the correct order online. To achieve this, the TDM maintains the transaction dependency data structure. The key responsibilities of the TDM include adding dependencies reported by WSPs into the transaction dependency data structure, managing transaction status updates, pushing 'ready transactions' to payer's WSP for processing, and updating transaction status based on the result of the transaction execution by the payer's WSP.

As used herein, the term 'payer' refers to a person or an organization that pays money.

As used herein, the term 'payee' refers to a person or an organization that receives money.

As used herein, the term 'wallet' refers to a software (application) or a hardware device, that enables to send and receive transactions, and stores tokens and transaction related information.

As used herein, the term 'online mode' refers to a state when a wallet has access to internet or other similar long-range network connection.

As used herein, the term 'offline mode' refers to a state when a wallet is not in online mode but has access to short-range network connection such as Bluetooth Low Energy (BLE), Near Field Communication (NFC), or Infrared Data Association (IrDA).

As used herein, the term 'proximity' refers to a state when two wallets can communicate with one another using short-range network connection.

As used herein, the term 'token' refers to an atomic unit of digital currency.

As used herein, the term 'token denomination' refers to an amount of digital currency represented by the token.

As used herein, the term 'transaction' refers to the transfer of tokens from payer's wallet to payee's wallet.

As used herein, the term 'offline transaction' refers to a transaction initiated when the payer's wallet is offline.

As used herein, the term 'online transaction' refers to a transaction initiated when the payer's wallet is online.

As used herein, the term 'offline received token' refers to a token that is received in one or more offline transactions.

As used herein, the term 'transaction dependency' refers to a state when a current offline transaction processing involves a token received in a previous offline transaction, and processing of the token in the current offline transaction depends on successful processing of the previous offline transaction. The current offline transaction is said to be dependent on the previous offline transaction.

As used herein, the term 'double spent token' refers to a token that is (i) included in multiple transactions by the payer wallet at least two of which are yet to be executed, or (ii) included in a transaction by the payer wallet when it is not the owner, and when it has not received the token in another previous offline transaction that is yet to be executed.

As used herein, the term 'wallet owned token' refers to a token whose ownership to a wallet is assigned by a wallet's service provider.

As used herein, the term 'token-proof is a pathway by which a token is received by the wallet if its use in an offline transaction.

The term 'safe to use offline' is used herein the context of a token and refers to a situation when its use in an offline transaction does not make it a double spent token.

As used herein, the notation 'WT' denotes the set of safe tokens in the wallet.

As used herein, the notation 'RT' denotes the set of tokens received by the wallet through the one or more offline transactions.

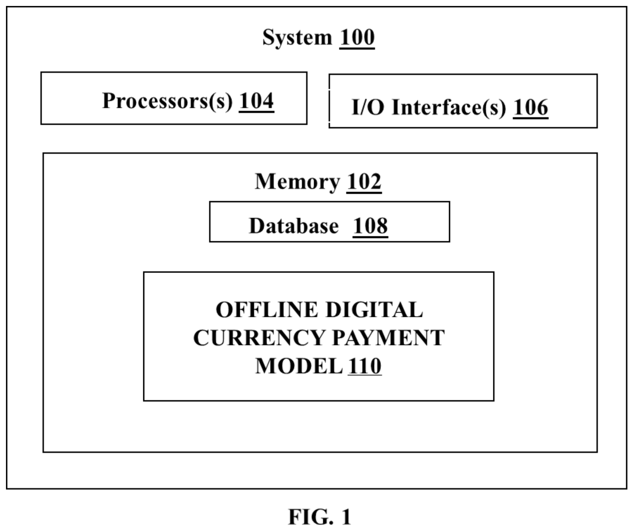

Referring now to the drawings, and more particularly to FIG. 1 through FIG. 2, where similar reference characters denote corresponding features consistently throughout the figures, there are shown preferred embodiments, and these embodiments are described in the context of the following exemplary system and/or method.

FIG. 1 illustrates an exemplary block diagram of a system 100 for an offline token-based digital currency payment, according to some embodiments of the present disclosure.

In an embodiment, the system 100 includes a processor(s) 104, communication interface device(s) 106, alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100. Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like. The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to number of external devices or to another server or devices. The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 102 includes an offline digital currency payment model 110. The offline digital currency payment model 110 facilitates transfer of tokens involved in the transaction in the offline mode. The offline mode can be represented when the payer's wallet does not have an active internet connectivity. The offline digital currency payment model 110 facilitates transaction of one or more tokens from the payer's wallet that comprises one or more wallet owned tokens (WTs), and one or more offline received tokens (RTs). The offline digital currency payment model 110 pre-validates the tokens (WTs, RTs) that are to be transferred in the offline transactions as safe. The offline digital currency payment model 110 assigns a token-proof to each of the one or more tokens and makes the WTs and RTs distinct. The transfer of a set of tokens from the payer's wallet is enabled only when both the payer's wallet and the payee's wallet are in proximity. The offline digital currency payment model 110 processes one or more transaction dependencies involved in the transfer of the set of tokens through a transaction dependency manager (TDM), wherein the payer's WSP and the payee's WSP independently communicates the one or more transaction dependencies to the TDM. The TDM processes the transaction as a 'ready transaction' when the one or more transaction dependencies on which the transaction is dependent are executed successfully, 'waiting transaction' when the one or more transaction dependencies on which the transaction is dependent are yet to be executed successfully, and a 'failed transaction' when at least one of the one or more transaction dependencies is a futile transaction. The offline digital currency payment model 110 submits only the 'ready transaction' to the payer's WSP for executing the transfer of the set of tokens.

The memory 102 further comprises of a plurality of modules that includes programs or coded instructions that supplement applications or functions performed by the system 100 for executing different steps involved in the analysis of the health of the subject, being performed by the system 100. The modules, amongst other things, can include routines, programs, objects, components, and data structures, which perform particular tasks or implement particular abstract data types. The modules may also be used as signal processor(s), node machine(s), logic circuitries, and/or any other device or component that manipulates signals based on operational instructions. Further, the modules can be used by hardware, by computer-readable instructions executed by the one or more hardware processors 104, or by a combination thereof. The modules may include computer-readable instructions that supplement applications or functions performed by the system 100. Further, the memory 102 may comprise information pertaining to input(s)/output(s) of each step performed by the processor(s) 104 of the system100 and methods of the present disclosure. Further, the memory 102 includes a database 108. The database (or repository) 108 may include a plurality of abstracted piece of code for refinement and data that is processed, received, or generated as a result of the execution of the plurality of modules. The external database is communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

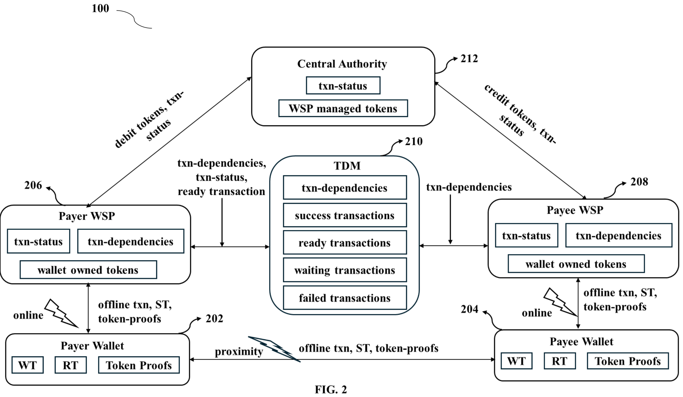

FIG. 2 illustrates an overall framework of offline token-based digital currency payment, according to some embodiments of the present disclosure.

As illustrated in FIG. 2, the offline token-based digital currency payment majorly involves a payer's wallet 202, a payee's wallet 204, a payer's wallet service provider (WSP) 206, a payee's WSP 208, a transaction dependency manager (210), and a central authority (CA) 212. The payer's wallet 202 initiates transaction of one or more tokens that comprises one or more wallet owned tokens (WTs), and one or more offline received tokens (RTs). The WTs and the RTs are pre-validated by the payer's wallet and ensures safe tokens to be transacted during the offline transaction. The WT's and the RT's have respective token proofs attached. The payer's wallet 202 implicitly and explicitly communicates with the payer's WSP 206. The payer's WSP 206 manages one or more wallet owned tokens, one or more transaction status and one or more transaction dependencies associated with the payer's wallet 202. Likewise, the payee's WSP 208 manages one or more wallet owned tokens, one or more transaction status and one or more transaction dependencies associated with the payee's wallet 204. The one or more transaction dependencies involved in the transfer of the set of tokens from the payer's wallet 202 to the payee's 204 wallet are processed through the TDM 210. The payer's WSP and the payee's WSP independently communicates the one or more transaction dependencies to the TDM 210. The TDM 210 processes the transaction as a 'ready transaction' when the one or more transaction dependencies on which the transaction is dependent are executed successfully, 'waiting transaction' when the one or more transaction dependencies on which the transaction is dependent are yet to be executed successfully, and a 'failed transaction' when at least one of the one or more transaction dependencies is a futile transaction. The TDM 210 submits only the 'ready transaction' to the payer's WSP for executing the transfer of the set of tokens. The CA 212 keeps a track of the transaction status as well as WSP managed tokens. The CA 212 finalizes the transfer of the set of tokens from the payer's wallet to the payee's wallet.

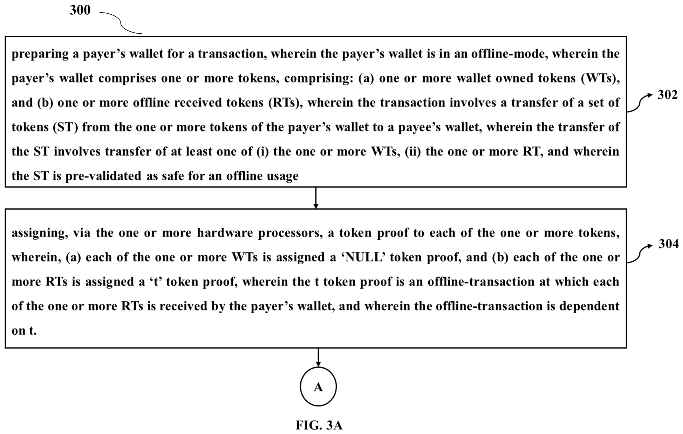

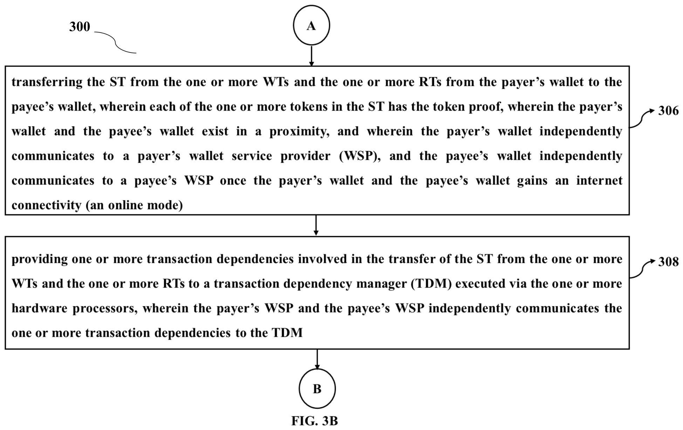

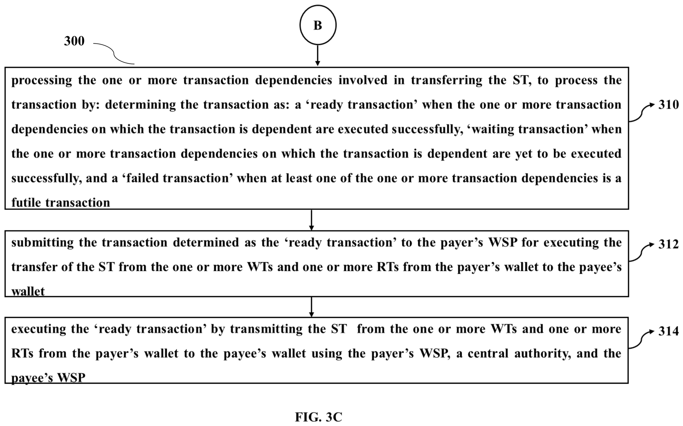

FIGS. 3A, 3B and 3C are flow diagrams of an illustrative method 300 for offline token-based digital currency payment, using the system of FIG. 1, according to some embodiments of the present disclosure.

The steps of the method 300 of the present disclosure will now be explained with reference to the components or blocks of the system 100 as depicted in FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously. In the present disclosure, the offline token-based digital currency payment method is provided that processes transfer of tokens in the absence of the internet connectivity. The offline mode can be represented when the payer's wallet does not have an active internet connectivity.

At step 302 of the method 300, the one or more hardware processors 104 are configured to prepare a payer's wallet for a transaction. The payer's wallet is in an offline-mode. The payer's wallet comprises one or more tokens, comprising: (a) one or more wallet tokens (WTs), and (b) one or more offline received tokens (RTs). The transaction involves a transfer of a set of tokens (ST) from the one or more tokens of the payer's wallet to a payee's wallet. The transfer of the ST involves transfer of at least one of (i) the one or more WTs, (ii) the one or more RTs. The ST is pre-validated as safe for an offline usage. The one or more WTs and the one or more RTs of the payer's wallet represent a digital currency to be utilized in the offline payment. The payer's WSP guarantees that the one or more WTs are owned by the payer's wallet. An ownership of each of the one or more RTs depends on the successful execution of a previous offline payment.

The transaction from the payer's wallet to the payee's wallet, transfer of the one or more WTs is prioritized over transfer of the one or more RTs, unless there is an unavailability of a necessary denomination within the WT. The payer's wallet receives the one or more WTs from the payer's WSP, and wherein the payer's WSP selects the one or more WTs from a part of tokens owned by the payer's wallet after removing one or more tokens included in one or more offline transactions in a pipeline for execution.

At step 304 of the method 300, the one or more hardware processors 104 are configured to assign a token-proof to each of the one or more tokens. Each of the one or more WTs is assigned a 'NULL' token-proof, and each of the one or more RTs is assigned a 'T' token-proof. The T token-proof is an offline-transaction at which each of the one or more RTs is received by the payer's wallet, and wherein the offline-transaction is dependent on T. When the payer's wallet receives a token (t) from an offline transaction (T1), it does not become the owner of the token until the payer's wallet is marked as the owner by the payer's WSP after the transaction is successfully executed. However, for flexibility, in the meantime the payer's wallet is allowed to spend the token in another transaction (T2). To indicate to the recipient the fact that the payer's wallet is using an unconfirmed token t, a token-proof T1 is included in the transaction T2 along with the token. Therefore, it is said that the transaction T2 depends on the transaction T1.

The benefit of stamping the token-proof in a transaction includes: (a) an up-front indication is received by the payee's wallet about the un-confirmed token being used in the transaction and provide payee's wallet an option to decline such transaction, (b) payer's wallet gets an option to utilize the token received in the offline transaction prior to transaction confirmation, and thus enabling a multi-hop offline transactions, and (c) enables the respective payer's WSP and payee's WSP to prioritize the order in which the one or more transactions are to be processed, thereby decreasing chances of transaction rejections by the respective payer's WSP and payee's WSP. Hence, the transaction of each RT of the one or more RTs from the payer's wallet to the payee's wallet involves assignment of the token-proof to the RT, wherein the token-proof indicates receipt of each RT of the one or more RTs associated with one or more previous offline transactions by the payer's wallet.

At step 306 of the method 300, the one or more hardware processors 104 are configured to transfer the ST from the one or more WTs and the one or more RTs from the payer's wallet to the payee's wallet. Each of the one or more tokens in the ST has the token-proof attached to it thus clearly distinguishing the authenticity of tokens whether related to a successful transaction or to the un-confirmed transaction. To enable the transfer of tokens, the payer's wallet and the payee's wallet are required to be in proximity. The proximity means when the two wallets can communicate with one another using short-range network connection. The transaction is facilitated between the payer's wallet and the payee's wallet in the proximity, and then once internet connectivity is restored, the transfer of the ST is independently communicated by the payer's wallet to the payer's WSP. Similarly, the receipt of the ST is independently communicated by the payee's wallet to the payee's WSP. The one or more WTs and the one or more RTs of the payer's wallet represent a digital currency to be utilized in the offline payment, and the payer's WSP guarantees that the one or more WTs are owned by the payer's wallet, and an ownership of each of the one or more RTs depends on the successful execution of a previous offline payment.

At step 308 of the method 300, the one or more hardware processors 104 are configured to provide one or more transaction dependencies involved in the transfer of the ST from the one or more WTs and the one or more RTs to a transaction dependency manager (TDM), wherein the payer's WSP and the payee's WSP independently communicates the one or more transaction dependencies to the TDM. Execution of the transactions are dependent on other processed or an ongoing transaction (directly or transitively). The one or more transaction dependencies are captured using the token-proof included in the transactions. The TDM manages the transaction dependencies of each transaction using the one or more transaction dependencies. The data structure maintained by the TDM is:$\left\{Txn_ID, SWSP, RWSP, Txn, Dependencies, Status\right\}$ wherein, Txn_ID denotes an identifier of the transaction,
SWSP denotes the payer WSP,
RWSP denotes the payee WSP,
Txn denotes the current transaction involving WTs ad RTs,
Dependencies denotes the one or more transaction dependencies involved in processing the current transaction, and
Status denotes one or more status of the current transaction.

At step 310 of the method 300, the one or more hardware processors 104 are configured to process the one or more transaction dependencies involved in transferring the ST, to process the transaction by determining a status of the transaction. The transaction is determined as a 'ready transaction' when the one or more transaction dependencies on which the transaction is dependent are executed successfully. The ready transactions are those which are being processed or have no transaction dependencies pending, or all of its transaction dependencies are successfully processed. The transaction is determined as the 'waiting transaction' when the one or more transaction dependencies on which the transaction is dependent are yet to be executed successfully. The current transaction under processing may have one or more transactions upon which processing of the current transaction has the transaction dependency. The current transaction is considered as the waiting transaction if at least one of the one or more transactions on which the current transaction depends is in waiting/ready state and none of the transactions on which the current transaction depends have failed. The transaction is determined as the 'failed transaction' when at least one of the one or more transaction dependencies is a futile transaction. If the execution of the current transaction fails or at least one transaction on which the current transaction depends is detected as failed, the current transaction could not process and captured as the failed transaction.

At step 312 of the method 300, the one or more hardware processors 104 are configured to submit the transaction determined as the 'ready transaction' to the payer's WSP for executing the transfer of the ST from the one or more WTs and the one or more RTs from the payer's wallet to the payee's wallet. The TDM submits only those transactions to the payer's WSP that are tagged as the 'ready transaction'. This ensures that the transaction does not have any un-cleared or pending or failed transaction dependencies and guarantees that if the payer's wallet is not the owner of any of the ST, then it is a deliberate attempt by the payer's wallet to double spend.

At step 314 of the method 300, the one or more hardware processors 104 are configured to execute the 'ready transaction' by transmitting the ST from the one or more WTs and the one or more RTs from the payer's wallet to the payee's wallet using the payer's WSP, a central authority, and the payee's WSP. The payer's WSP validates that all the ST are owned by the payer wallet, and temporarily removes ST from the set of tokens owned by the payer wallet. The payer's WSP sends the transaction to the central authority for further processing. The central authority validates that the ST are indeed managed by the payer's WSP, and temporarily marks that the ST are managed by the payee's WSP and sends the transaction to the payee's WSP for further processing. The payee's WSP validates that the payee wallet exists and is eligible to receive tokens and adds the ST to the set of tokens owned by the payee wallet. The payee's WSP sends a successful transaction message to the central authority and the payee's wallet. The central authority finalizes that the ST are managed by the payee's WSP and sends the successful transaction message to the payer's WSP. The payer's WSP permanently removes the ST from the set of tokens owned by the payer wallet; and sends a successful transaction message to the payer wallet. If all the validations succeed for the transaction, the transaction is deemed to be a 'success transaction', and if any of the validations fail, the transaction is deemed to be a 'failed transaction'. Failed transactions do not cause any changes to the token information. The payer's WSP sends the transaction status message to the TDM.

Therefore, the offline transaction is executed inclusive of only genuine tokens. This ensures authenticity of the offline transactions and facilitates execution of offline transactions in the appropriate order. No separate ledger is required to be maintained to record such offline transactions as all the transactions are distinguished based on the token-proof.

According to an embodiment, in the transaction from the payer's wallet to the payee's wallet, transfer of the one or more WTs is prioritized over transfer of the one or more RTs, unless there is an unavailability of a necessary denomination within the WT.

According to an embodiment, wherein the payer's wallet receives the one or more WTs from the payer's WSP, and wherein the payer's WSP selects the one or more WTs from a part of tokens owned by the payer's wallet after removing one or more tokens included in one or more offline transactions in a pipeline for execution.

According to an embodiment, at each transaction, the payer's wallet ensures that the one or more WTs, the one or more RTs of the ST are not double spent by at least one of two ways: (i) payer's wallet removes the ST from the one or more RTs that are received during the one or more offline transactions, and from the one or more WTs that are received from the payer's WSP preventing the payer's wallet from using the ST in any further offline transaction, and (ii) payer's wallet removes the part of the one or more WTs used by the payer's WSP in one or more online transactions from the one or more WTs preventing the payer's wallet from using the part of the one or more WTs in the any further offline transaction.

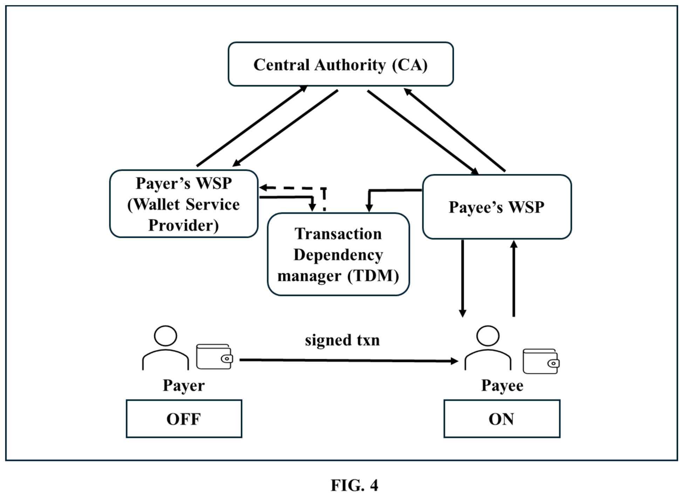

FIG. 4 illustrates a token-based offline transaction where the payer is in the offline mode, and the payee is in the online mode.

As illustrated in the FIG. 4 the scenario involves the offline transaction to be processed between the payer and the payee when the payer wallet is in the offline mode, and the payee wallet is in the online mode. The payer's wallet prepares a transaction with transaction identity say T - only using tokens the one or more WTs to the extent possible, and signs it with its signature key. The payer's wallet adds the transaction to the set of offline spend transactions. For the tokens used from the one or more WTs, the token-proof assigned is NULL, and for the tokens used from the one or more RTs, the token-proof stored by the payer's wallet is used. The payer's wallet removes the tokens used in the transaction (ST) from the one or more WTs and the one or more RTs and sends the signed transaction to the payee's wallet. The payee's wallet validates the transaction by checking the payer's wallet signature, checking issuers signature on the one or more ST, and checks that the one or more ST are not currently owned by it. The payee's wallet adds the transaction to its set of offline received transactions, adds the ST to RT, and for all the ST, stores the token-proof as T. The payee's wallet submits the transaction to the payee's WSP (RWSP) for processing. The RWSP validates the transaction and verifies the status of the payee's wallet. Upon successful validation, the RWSP submits the transaction to the TDM for dependency processing. The TDM validates and adds the transaction received from RWSP to the transaction dependency data structure and manages the transaction status. When the transaction becomes a 'ready transaction', the TDM submits the transaction to the payer's WSP (SWSP) for execution. The SWSP performs the usual validation checks that the payer's wallet (i) is active and (ii) is eligible to perform debit transactions, and (iii) owns the ST. Upon successful validation, the SWSP adds the transaction to its set of offline spend transactions, temporarily marks the tokens as spent by the payer wallet and forwards the transaction to the central authority (CA) for further processing. The CA authenticates the request and temporarily changes the token-manager mapping for the ST to the RWSP. The CA then forwards the transaction to the RWSP for further processing. The RWSP performs the usual payee wallet validation checks, and if successful assigns the token ownership of the ST to the payee wallet. The RWSP sends the transaction success status to the CA and the payee wallet. The CA maps the RWSP as the token-manager for the ST and forwards the transaction success to the SWSP. The SWSP removes the ST from the set of tokens owned by the payer wallet, confirms the ST as spent by the payer wallet and forwards the transaction success to the TDM and the payer's wallet. TDM updates the transaction status and performs dependency processing.

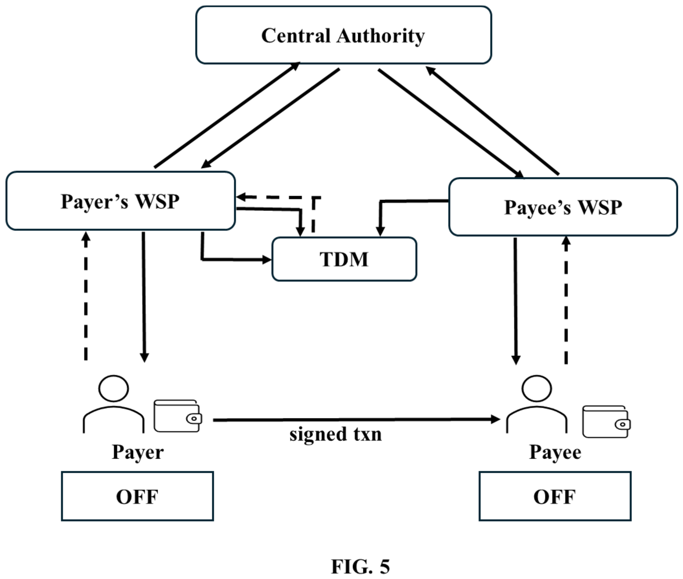

FIG. 5 illustrates a token-based offline transaction where the payer is in the offline mode, and the payee is in the offline mode.

As illustrated in the FIG. 5 the scenario involves the offline transaction to be processed between the payer and the payee when the payer wallet as well as the payee wallet both are in the offline mode. The payer's wallet prepares a transaction with the transaction identity say T - only using tokens the one or more WTs to the extent possible, and signs it with its signature key. The payer's wallet adds the transaction to the set of offline spend transactions. For the tokens used from one or more WTs, the token-proof assigned is NULL, and for the tokens used from one or more RTs, the token-proof stored by the payer's wallet is used. The payer's wallet removes the tokens used in the transaction (ST) from the one or more WTs and the one or more RTs and sends the signed transaction to the payee wallet. The payee's wallet validates the transaction by checking the payer's wallet signature, issuers signature on the ST, and by checking that the one or more ST are not currently owned by it. The payee's wallet adds the transaction to its set of offline received transactions, adds the ST to RT, and for all the ST stores the token-proof as T. The payer's wallet and the payee's wallet independently submit the transaction to their respective WSP, i.e. SWSP and RWSP, when they are in online mode. The WSPs (SWSP/RWSP) validate the transaction and independently submit the transaction to the TDM for dependency processing. The TDM validates and adds the transaction received from the WSPs (SWSP/RWSP) to the transaction dependency data structure and manages the transaction status. When the transaction becomes a 'ready transaction', the TDM submits the transaction to the SWSP for execution. The SWSP performs the usual validation checks that the payer's wallet (i) is active and (ii) is eligible to perform debit transactions, and (iii) owns the ST. Upon successful validation, the SWSP adds the transaction to its set of offline spend transactions, temporarily marks the tokens as spent by the payer wallet and forwards the transaction to the central authority (CA) for further processing. The CA authenticates the request and temporarily changes the token-manager mapping for the ST to the RWSP. The CA then forwards the transaction to the RWSP for further processing. The RWSP performs the usual payee wallet validation checks, and if successful assigns the token ownership of the ST to the payee wallet. The RWSP sends the transaction success status to the CA and the payee wallet. The CA maps the RWSP as the token-manager for the ST and forwards the transaction success to the SWSP. The SWSP removes the ST from the set of tokens owned by the payer wallet, confirms the ST as spent by the payer wallet and forwards the transaction success to the TDM and the payer's wallet. TDM updates the transaction status and performs dependency processing.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements within substantial differences from the literal language of the embodiments described herein.

Therefore, the method of offline token-based digital currency payment facilitates the transaction between the payer and the payee. The payer's wallet has a clear demarcation of the tokens as the one or more WTs and the one or more RTs. Transactions include the token-proof to specify whether the transaction involves the one or more WTs, or the one or more RTs or both. The one or more RTs and the one or more WTs are pre-validated as safe for use in the offline transactions. The transfer of a set of tokens from the payer's wallet is enabled only when both the payer's wallet and the payee's wallet are in proximity. The TDM enables processing of the one or more transaction dependencies involved in the transfer of the set of tokens. The offline transactions marked as 'ready transaction' are submitted to the payer's WSP for execution.

It is to be understood that the scope of the protection is extended to such a program and in addition to a computer-readable means having a message therein; such computer-readable storage means contain program-code means for mplementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300) of conducting an offline token-based digital currency payment, the method comprising:
preparing (302), via one or more hardware processors, a payer's wallet for a transaction, wherein the payer's wallet is in an offline-mode, wherein the payer's wallet comprises one or more tokens, comprising: (a) one or more wallet owned tokens (WTs), and (b) one or more offline received tokens (RTs),
wherein the transaction involves a transfer of a set of tokens (ST) from the one or more tokens of the payer's wallet to a payee's wallet,
wherein the transfer of the ST involves transfer of at least one of (i) the one or more WTs, (ii) the one or more RT,
and wherein the ST is pre-validated as safe for an offline usage;
assigning (304), via the one or more hardware processors, a token-proof to each of the one or more tokens, wherein,
(a) each of the one or more WTs is assigned a 'NULL' token-proof, and
(b) each of the one or more RTs is assigned a 't' token-proof, wherein the t token-proof is an offline-transaction at which each of the one or more RTs is received by the payer's wallet, and wherein the offline-transaction is dependent on t;
transferring (306), via the one or more hardware processors, the ST from the one or more WTs and the one or more RTs from the payer's wallet to the payee's wallet,
wherein each of the one or more tokens in the ST has the token-proof,
wherein the payer's wallet and the payee's wallet exist in a proximity, and
wherein the payer's wallet independently communicates to a payer's wallet service provider (WSP), and the payee's wallet independently communicates to a payee's WSP once the payer's wallet and the payee's wallet gains an internet connectivity;
providing (308), via the one or more hardware processors, one or more transaction dependencies involved in the transfer of the ST from the one or more WTs and the one or more RTs to a transaction dependency manager (TDM) executed via the one or more hardware processors, wherein the payer's WSP and the payee's WSP independently communicates the one or more transaction dependencies to the TDM;
processing (310), via the one or more hardware processors, the one or more transaction dependencies involved in transferring the ST, to process the transaction by:
determining the transaction as a 'ready transaction' when the one or more transaction dependencies on which the transaction is dependent are executed successfully,
determining the transaction as 'waiting transaction' when the one or more transaction dependencies on which the transaction is dependent are yet to be executed successfully, and
determining the transaction as a 'failed transaction' when at least one of the one or more transaction dependencies is a futile transaction;
submitting (312), via the one or more hardware processors, the transaction determined as the 'ready transaction' to the payer's WSP for executing the transfer of the ST from the one or more WTs and the one or more RTs from the payer's wallet to the payee's wallet; and
executing (314), via the one or more hardware processors, the ready transaction by transmitting the ST from the one or more WTs and the one or more RTs from the payer's wallet to the payee's wallet using the payer's WSP, a central authority, and the payee's WSP.

2. The method as claimed in claim 1, wherein the processing of the one or more transaction dependencies, and the submission of the ready transaction to the payer's WSP are executed by the TDM.

3. The method as claimed in claim 1, wherein the one or more WTs and the one or more RTs of the payer's wallet represent a digital currency to be utilized in the offline payment, wherein the payer's WSP guarantees that the one or more WTs are owned by the payer's wallet, and wherein an ownership of each of the one or more RTs depends on the successful execution of a previous offline payment.

4. The method as claimed in claim 1, wherein the transaction of each RT of the one or more RTs from the payer's wallet to the payee's wallet involves assignment of the token-proof to the RT, wherein the token-proof indicates receipt of each RT of the one or more RTs associated with one or more previous offline transactions by the payer's wallet.

5. The method as claimed in claim 1, wherein the transaction from the payer's wallet to the payee's wallet, transfer of the one or more WTs is prioritized over transaction of the one or more RTs, unless there is an unavailability of a necessary denomination within the WT.

6. The method as claimed in claim 1, wherein the payer's wallet receives the one or more WTs from the payer's WSP, and wherein the payer's WSP selects the one or more WTs from a part of tokens owned by the payer's wallet after removing one or more tokens included in one or more offline transactions in a pipeline for execution.

7. The method as claimed in claim 1, wherein at each transaction, the payer's wallet ensures that the one or more WTs, the one or more RTs of the ST are not double spent by at least one of two ways:
(i) the payer's wallet removes the ST from the one or more RTs that are received during the one or more offline transactions, and from the one or more WTs that are received from the payer's WSP preventing the payer's wallet from using the ST in any further offline transaction, and
(ii) the payer's wallet removes the part of the one or more WTs used by the payer's WSP in one or more online transactions from the one or more WTs preventing the payer's wallet from using the part of the one or more WTs in the any further offline transaction.

8. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
prepare a payer's wallet for a transaction, wherein the payer's wallet is in an offline-mode, wherein the payer's wallet comprises one or more tokens, comprising: (a) one or more wallet owned tokens (WTs), and (b) one or more offline received tokens (RTs),
wherein the transaction involves a transfer of a set of tokens (ST) from the one or more tokens of the payer's wallet to a payee's wallet,
wherein the transfer of the ST involves transfer of at least one of (i) the one or more WTs, (ii) the one or more RT,
and wherein the ST is pre-validated as safe for an offline usage;
assign a token-proof to each of the one or more tokens, wherein,
(a) each of the one or more WTs is assigned a 'NULL' token-proof, and
(b) each of the one or more RTs is assigned a 't' token-proof, wherein the t token-proof is an offline-transaction at which each of the one or more RTs is received by the payer's wallet, and wherein the offline-transaction is dependent on t;
transfer the ST from the one or more WTs and the one or more RTs from the payer's wallet to the payee's wallet,
wherein each of the one or more tokens in the ST has the token-proof,
wherein the payer's wallet and the payee's wallet exist in a proximity, and
wherein the payer's wallet independently communicates to a payer's wallet service provider (WSP), and the payee's wallet independently communicates to a payee's WSP once the payer's wallet and the payee's wallet gains an internet connectivity (an online mode);
provide one or more transaction dependencies involved in the transfer of the ST from the one or more WTs and the one or more RTs to a transaction dependency manager (TDM) executed via the one or more hardware processors, wherein the payer's WSP and the payee's WSP independently communicates the one or more transaction dependencies to the TDM;
process the one or more transaction dependencies involved in transferring the ST, to process the transaction by:
determining the transaction as a 'ready transaction' when the one or more transaction dependencies on which the transaction is dependent are executed successfully,
determining the transaction as 'waiting transaction' when the one or more transaction dependencies on which the transaction is dependent are yet to be executed successfully, and
determining the transaction as a 'failed transaction' when at least one of the one or more transaction dependencies is a futile transaction;
submit the transaction determined as the 'ready transaction' to the payer's WSP for executing the transfer of the ST from the one or more WTs and the one or more RTs from the payer's wallet to the payee's wallet; and
execute the 'ready transaction' by transmitting the ST from the one or more WTs and the one or more RTs from the payer's wallet to the payee's wallet using the payer's WSP, a central authority, and the payee's WSP.

9. The system as claimed in claim 8, wherein the processing of the one or more transaction dependencies, and the submission of the ready transaction to the payer's WSP are executed by the TDM.

10. The system as claimed in claim 8, wherein the one or more WTs and the one or more RTs of the payer's wallet represent a digital currency to be utilized in the offline payment, wherein the payer's WSP guarantees that the one or more WTs are owned by the payer's wallet, and wherein an ownership of each of the one or more RTs depends on the successful execution of a previous offline payment.

11. The system as claimed in claim 8, wherein the transaction of each RT of the one or more RTs from the payer's wallet to the payee's wallet involves assignment of the token-proof to the RT, wherein the token-proof indicates receipt of each RT of the one or more RTs associated with one or more previous offline transactions by the payer's wallet.

12. The system as claimed in claim 8, wherein the transaction from the payer's wallet to the payee's wallet, transfer of the one or more WTs is prioritized over transaction of the one or more RTs, unless there is an unavailability of a necessary denomination within the WT.

13. The system as claimed in claim 8, wherein the payer's wallet receives the one or more WTs from the payer's WSP, and wherein the payer's WSP selects the one or more WTs from a part of tokens owned by the payer's wallet after removing one or more tokens included in one or more offline transactions in a pipeline for execution.

14. The system as claimed in claim 8, wherein at each transaction, the payer's wallet ensures that the one or more WTs, the one or more RTs of the ST are not double spent by at least one of two ways:
(i) the payer's wallet removes the ST from the one or more RTs that are received during the one or more offline transactions, and from the one or more WTs that are received from the payer's WSP preventing the payer's wallet from using the ST in any further offline transaction, and
(ii) the payer's wallet removes the part of the one or more WTs used by the payer's WSP in one or more online transactions from the one or more WTs preventing the payer's wallet from using the part of the one or more WTs in the any further offline transaction.

15. One or more non-transitory machine-readable information storage mediums comprising one or more instructions which when executed by one or more hardware processors cause:
preparing a payer's wallet for a transaction, wherein the payer's wallet is in an offline-mode, wherein the payer's wallet comprises one or more tokens, comprising: (a) one or more wallet owned tokens (WTs), and (b) one or more offline received tokens (RTs),
wherein the transaction involves a transfer of a set of tokens (ST) from the one or more tokens of the payer's wallet to a payee's wallet,
wherein the transfer of the ST involves transfer of at least one of (i) the one or more WTs, (ii) the one or more RT,
and wherein the ST is pre-validated as safe for an offline usage;
assigning a token-proof to each of the one or more tokens, wherein,
(a) each of the one or more WTs is assigned a 'NULL' token-proof, and
(b) each of the one or more RTs is assigned a 't' token-proof, wherein the t token-proof is an offline-transaction at which each of the one or more RTs is received by the payer's wallet, and wherein the offline-transaction is dependent on t;
transferring the ST from the one or more WTs and the one or more RTs from the payer's wallet to the payee's wallet,
wherein each of the one or more tokens in the ST has the token-proof,
wherein the payer's wallet and the payee's wallet exist in a proximity, and
wherein the payer's wallet independently communicates to a payer's wallet service provider (WSP), and the payee's wallet independently communicates to a payee's WSP once the payer's wallet and the payee's wallet gains an internet connectivity (an online mode);
providing one or more transaction dependencies involved in the transfer of the ST from the one or more WTs and the one or more RTs to a transaction dependency manager (TDM) executed via the one or more hardware processors, wherein the payer's WSP and the payee's WSP independently communicates the one or more transaction dependencies to the TDM;
processing the one or more transaction dependencies involved in transferring the ST, to process the transaction by:
determining the transaction as a 'ready transaction' when the one or more transaction dependencies on which the transaction is dependent are executed successfully,
determining the transaction as 'waiting transaction' when the one or more transaction dependencies on which the transaction is dependent are yet to be executed successfully, and
determining the transaction as a 'failed transaction' when at least one of the one or more transaction dependencies is a futile transaction;
submitting the transaction determined as the 'ready transaction' to the payer's WSP for executing the transfer of the ST from the one or more WTs and the one or more RTs from the payer's wallet to the payee's wallet; and
executing the 'ready transaction' by transmitting the ST from the one or more WTs and the one or more RTs from the payer's wallet to the payee's wallet using the payer's WSP, a central authority, and the payee's WSP.
